# DEMANDE DE BREVET EUROPEEN

(11) **EP 2 995 515 A1**
(43) Date de publication de la demande: **16.03.2016**
(21) Numéro de dépôt: 15184787.8
(22) Date de dépôt: 11.09.2015
(51) Int. Cl.: B60S 1/52, B60S 1/48, B60S 1/38

(54) **INTERFACE HYDRAULIQUE AMÉLIORÉE POUR UN SYSTEME D'APPROVISIONNEMENT ET/OU DE DISTRIBUTION EN LIQUIDE LAVE GLACE DE VEHICULE AUTOMOBILE**

(30) Priorité: 11.09.2014 FR 1458525
(71) Demandeur: Valeo Systèmes d'Essuyage, 78321 Le Mesnil Saint Denis (FR)
(72) Inventeur: CARRION, Julien, 63570 BRASSAC LES MINES (FR); KOLANOWSKI, Grégory, 43300 SIAUGUES-SAINT-ROMAIN (FR)
(74) Mandataire: Vincent, Catherine Marie Marguerite

(57) **Abrégé**

L'invention concerne un élément de raccordement (7) entre un tube (6) d'alimentation en liquide et un connecteur (4) d'un dispositif d'essuyage d'une vitre d'un véhicule, ledit élément de raccordement comprenant au moins un conduit (10, 11), apte à canaliser le liquide entre ledit tube d'alimentation et ledit connecteur, et un moyen de chauffage (14) du liquide circulant dans le ou lesdits conduits (10, 11), ledit moyen de chauffage étant apte à être alimenté électriquement et positionné sur une zone dudit élément de raccordement, dite zone de chauffage, s'inscrivant au moins en partie dans un encombrement du ou desdits conduits (10, 11), caractérisé en ce que la section interne du ou des conduits (10, 11) reste constante sur toute leur longueur au niveau de ladite zone de chauffage ainsi qu'en amont et/ou en aval de ladite zone de chauffage.

L'invention couvre également un système d'approvisionnement et/ou de distribution (9) en liquide lave-glace d'une installation d'essuyage pour véhicule automobile, comprenant un tel élément de raccordement.

## Description

Le secteur technique de la présente invention est celui des systèmes d'approvisionnement et/ou de distribution en liquide lave glace pour véhicule automobile. Un tel système accompagne une installation d'essuyage des vitres avant et/ou arrière du véhicule. Plus particulièrement l'invention vise les interfaces hydrauliques installées entre un tube d'amenée du liquide de lavage et un connecteur du dispositif d'essuyage.

Les automobiles sont couramment équipées d'une installation d'essuyage et d'un système de lavage pour assurer un essuyage et un lavage du pare-brise et ainsi éviter que la vision qu'a le conducteur de son environnement ne soit perturbée. Ces installations d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Le balai est rattaché au bras tournant de l'essuie-glace par un ensemble constitué d'un connecteur mécanique et d'un adaptateur. Le connecteur est une pièce qui est fixée directement sur la structure du balai, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

Les systèmes de lavage comprennent, quant à eux, un dispositif d'amenée d'un liquide lave-vitre qui est acheminé depuis un réservoir situé sur le véhicule et qui est projeté en direction du pare-brise par des gicleurs situés généralement sur le capot, sur la grille de baie de pare-brise ou sur l'essuie-glace lui-même pour une meilleure distribution du liquide. Dans le cas de gicleurs placés sur les balais et alimentés en liquide par des rampes d'alimentation s'étendant le long de la direction longitudinale du balai, le liquide lave-vitre est acheminé, avant d'être réparti entre lesdits gicleurs, par des canalisations qui sont fixées sur le bras de l'essuie-glace et qui sont raccordées à un système de distribution du liquide au niveau du connecteur. Le connecteur comporte ainsi des orifices aptes à recevoir, par une liaison étanche, un élément de raccordement des canalisations sur le connecteur. En outre, ces canalisations sont généralement au nombre de deux par balai, de façon à projeter du liquide en amont de celui-ci quel que soit son sens de déplacement.

Lorsque la température extérieure est trop basse, par exemple en-dessous de 5°C, on chauffe le liquide lave-glace pour le dégivrer ou le maintenir liquide. Pour cela, les canalisations de transport sont équipées d'un dispositif de réchauffement du liquide lave-glace, qui a été prélevé dans un réservoir par une pompe, au moment ou l'on actionne la commande du lave-glace.

L'élément de raccordement installé entre la canalisation et le connecteur est également une zone froide, où le liquide de lavage risque de geler. Il est donc nécessaire d'y installer un moyen de chauffage, comme c'est déjà le cas pour les canalisations d'amenée du liquide, qui y aboutissent. Diverses solutions ont été imaginées pour implanter le moyen de chauffage sur cet élément de raccordement, qui se traduisent en général par l'installation d'un dispositif entre ses deux tubes de conduite du liquide. Comme l'encombrement global du dispositif de raccordement est limité du fait qu'il doit rester à l'intérieur de la section transversale du connecteur, une solution adoptée a été de réduire la section des tubes de l'élément de raccordement, au droit du dispositif de chauffage. Cette solution se traduit cependant par une augmentation des pertes de charge dans l'élément de raccordement et, par suite, par une réduction du débit qui est envoyé, à même pression, aux rampes d'alimentation du balai d'essuie-glaces.

Le but de la présente invention est donc de pallier cet inconvénient en proposant un élément de raccordement, muni d'un dispositif de chauffage, dont l'encombrement reste faible, tout en améliorant le niveau de pression qu'il restitue en aval.

L'invention a ainsi pour objet un élément de raccordement entre un tube d'alimentation en liquide et un connecteur d'un dispositif d'essuyage d'une vitre d'un véhicule, ledit élément de raccordement comprenant au moins un conduit, apte à canaliser le liquide entre ledit tube d'alimentation et ledit connecteur, et un moyen de chauffage du liquide circulant dans le ou lesdits conduits, ledit moyen de chauffage étant apte à être alimenté électriquement et positionné sur une zone dudit élément de raccordement, dite zone de chauffage, s'inscrivant au moins en partie dans un encombrement du ou desdits conduits. Selon l'invention, la section interne du ou des conduits reste constante sur toute leur longueur au niveau de ladite zone de chauffage ainsi qu'en amont et/ou en aval de ladite zone de chauffage.

En rendant constante la section des tubes on évite les variations de pression le long des tubes, et donc les variations de la vitesse de circulation du liquide, et on réduit ainsi les pertes de charge à l'intérieur de l'élément de raccordement. On constate qu'une section constante offre de meilleurs résultats que des sections larges entrecoupées par une section à une valeur réduite, même si celle-ci est égale à la section constante revendiquée.

Selon différents modes de réalisation qui pourront être pris ensemble ou séparément :
- ledit élément de raccordement comprend deux dits conduits destinés à être raccordés audit tube d'alimentation, prévu double,
- lesdits conduits sont reliés l'un à l'autre par un moyen de solidarisation formant moyen d'espacement entre eux et définissant ladite zone de chauffage,
- lesdits conduits sont constitués par une succession de segments, les segments d'un conduit étant parallèles à ceux de l'autre conduit,
- lesdits segments ont une section de même forme,
- la section interne de tous les segments desdits conduits a la forme d'une combinaison d'un arc de cercle et d'un segment sécant audit arc de cercle,
- le moyen de solidarisation est un plateau s'étendant, selon un plan diamétral, entre deux desdits segments, dits segments centraux,
- lesdits segments sécants sont orientés perpendiculairement au plateau du moyen de solidarisation,
- lesdits segments centraux ont une section extérieure réduite par rapport à celle des autres segments desdits tubes.

L'invention concerne également un système d'approvisionnement et/ou de distribution en liquide lave-glace d'une installation d'essuyage pour véhicule automobile comprenant au moins un tube d'alimentation en liquide, un connecteur d'un dispositif d'essuyage et un élément de raccordement selon l'une des revendications précédentes, reliant ledit tube audit connecteur.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un dispositif d'essuyage pour véhicule automobile,
- la figure 2 est une vue de détail de la figure 1,
- la figure 3 est une vue en perspective d'un élément de raccordement des canalisations d'amenée de liquide, à un connecteur, n'utilisant pas l'invention,
- la figure 4 est une vue en perspective d'un élément de raccordement des canalisations d'amenée de liquide, à un connecteur, selon l'invention, et
- la figure 5 est un diagramme montrant le niveau des pertes de charge dans un élément de raccordement selon l'art antérieur et selon l'invention.

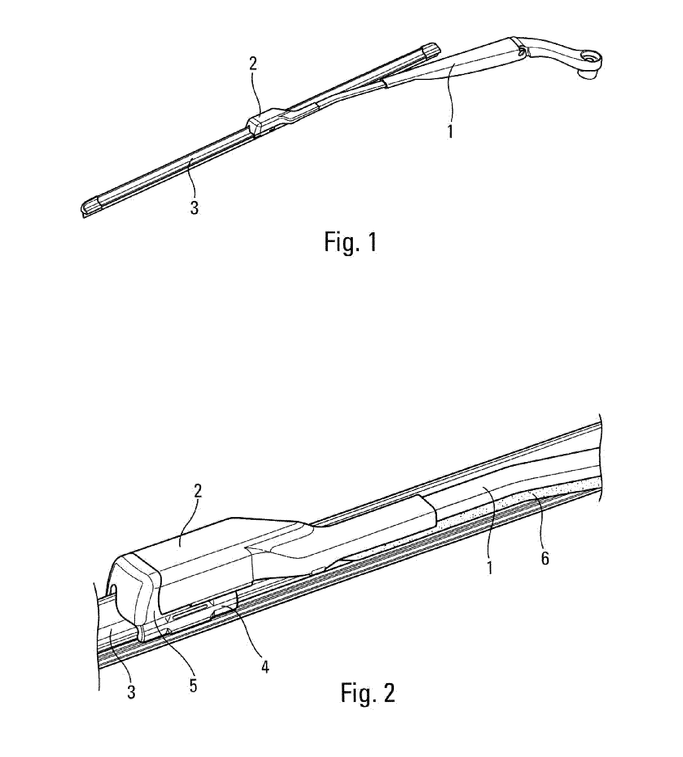

En se référant aux figures 1 et 2, on voit un dispositif d'essuyage pour une vitre d'un véhicule automobile, autrement appelé essuie-glace, composé d'un porte-balai ou bras 1 se terminant à son extrémité externe par une chape 2, qui est fixée, notamment par sertissage, sur le bras 1. De manière alternative, cette chape peut être formée à l'extrémité du bras par déformation de ce dernier et constituer un ensemble unitaire avec le bras. Celui-ci a pour fonction, par l'intermédiaire d'un adaptateur 5 et d'un connecteur 4, de supporter un balai d'essuyage 3.

Le balai comporte au moins une rampe d'alimentation de liquide destinée à alimenter en liquide lave-glace des orifices de projection de liquide. De préférence ces rampes peuvent être au nombre de deux et s'étendre le long de la direction longitudinale du balai. De façon facultative, le balai peut comprendre des moyens de chauffage destinés à réchauffer la lame du balai et la ou les rampe(s) d'alimentation de liquide.

L'adaptateur 5 est une pièce intermédiaire assurant une compatibilité entre différentes formes de chape et un même balai d'essuyage alors que le connecteur 4 est serti sur le balai d'essuyage 3 et assure, d'une part, une transmission des efforts vers le balai et, d'autre part, le transport et la distribution du liquide de lavage vers le balai d'essuyage. De façon facultative, le connecteur 4 peut assurer l'acheminement du courant électrique pour le réchauffage des rampes d'alimentation du balai.

Un tube d'alimentation 6 en liquide de lavage longe le bras 1 jusqu'au connecteur 4 sur lequel il se fixe au moyen d'un élément de raccordement, qui est l'objet de l'invention. Le tube d'alimentation 6 comprend classiquement deux conduits pour alimenter alternativement les rampes d'alimentation situées d'un côté ou de l'autre du balai 3. Ce tube d'alimentation se fixe à son extrémité distale, c'est-à-dire celle située du côté du balai 3, sur une pièce rigide, désigné ci-après sous le vocable d'élément de raccordement 7, qui est réalisée généralement en matériau polymère et qui assure la solidarisation du tube d'alimentation avec le connecteur 4, quels que soient les mouvements de ce dernier. Cet élément a pour fonction notamment de faciliter l'amovibilité du tube d'alimentation vis-à-vis du connecteur, lors d'un remplacement du balai d'essuyage, en raison, par exemple, de son usure.

Pour cela l'élément de raccordement se termine, d'une part du côté du tube d'alimentation 6, par deux premiers embouts qui ont vocation à pénétrer en force dans l'extrémité des conduits du tube d'alimentation, la face frontale du tube d'alimentation venant alors buter contre des collerettes s'étendant radialement à partir des premiers embouts et, d'autre part du côté du connecteur 4, par deux seconds embouts qui ont, eux, vocation à pénétrer dans deux conduits traversant le connecteur 4 du dispositif d'essuyage. Des joints (non représentés sur les figures) peuvent être positionnés sur les différents embouts pour assurer l'étanchéité hydraulique de ces connexions.

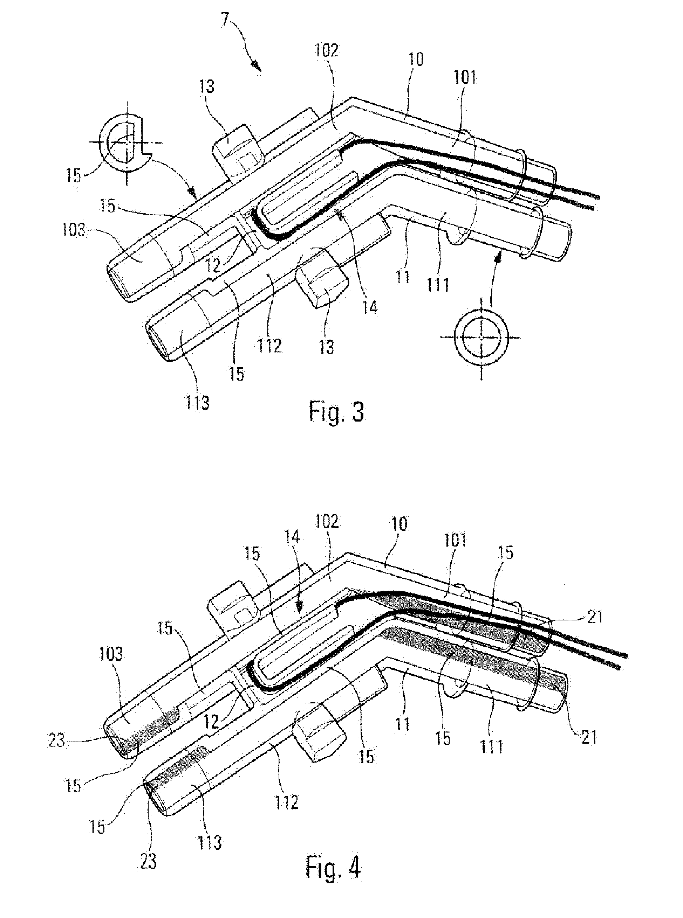

Comme on peut le voir sur la figure 3, l'élément de raccordement se présente sous la forme de deux conduits 10 et 11 qui se terminent à chacune de leurs deux extrémités, par les premiers et seconds embouts mentionnés plus haut. Les premiers embouts sont installés de manière à former un angle non-nul avec la direction longitudinale des seconds embouts, dans le but de faciliter le montage du tube d'alimentation 6 sur l'élément de raccordement et de permettre, en utilisation, de rabattre la chape 2 contre le balai 3.

Les deux conduits parallèles 10 et 11 sont reliés l'un à l'autre par une partie structurale centrale 12 qui assure la nécessaire cohésion de l'ensemble et qui comprend des moyens de support 13 s'étendant latéralement, au niveau de son centre de gravité. Ces moyens de support prennent la forme de deux excroissances qui s'étendent selon des axes perpendiculaires à la direction longitudinale de l'élément de raccordement. Ils sont destinés à maintenir mécaniquement l'élément de raccordement en contact avec l'adaptateur, lorsqu'il convient de redresser le bras d'essuie-glaces pour changer de balai, tout en autorisant les mouvements relatifs de celui-ci lorsque le balai 3 circule sur la vitre.

La partie structurale 12 a, en première approximation et sans que cette forme soit impérative, la forme d'un plateau qui s'étend entre les deux conduits parallèles 10 et 11, au niveau de leur plan diamétral commun. Sur la partie supérieure de ce plateau s'étend un moyen de chauffage 14 dont la fonction est de transformer le courant électrique qui le traverse en calories à dissiper au niveau des deux conduits parallèles. On forme de la sorte une zone de chauffage sur l'adaptateur où le moyen de chauffage 14 est positionné. Pour cela un fil résistif du moyen de chauffage court sur le plateau 12 en formant une boucle dont deux branches longent respectivement chacune les conduits parallèles 10 et 11. Ce moyen de chauffage est solidarisé, c'est-à-dire solidement fixé, contre la face supérieure du plateau 12. A titre d'exemple, le moyen de chauffage 14 peut être collé ou fixé au moyen d'une bande adhésive interposée entre lui et la face supérieure dudit plateau.

Du fait de l'encombrement latéral de ce moyen de chauffage, les conduits de l'élément de raccordement illustré ont une section réduite par le placement d'un méplat qui empiète sur l'intérieur des conduits, de leur côté interne. Ce méplat s'étend longitudinalement sur toute la partie des conduits qui fait face au plateau 12, et au moyen de chauffage 14 qui est positionné dessus. Les conduits parallèles sont ainsi formés, chacun, de trois segments ou parties : des premières parties 101 et 111 à sections parfaitement cylindriques, qui vont de l'embout qui pénètre dans les conduits du tube d'alimentation 6 jusqu'au début du plateau 12 ; des secondes parties 102 et 112 qui s'étendent longitudinalement sur toute la longueur du plateau, ou tout au moins sur sa partie porteuse du moyen de chauffage, et qui présentent une réduction de leur section interne du fait d'un méplat 15 faisant face au plateau 12 ; et enfin des troisièmes parties 103 et 113, à nouveau parfaitement cylindriques et qui vont de l'extrémité distale du plateau 12 jusqu'aux embouts qui ont vocation à pénétrer dans les orifices correspondants du connecteur 4. La section des tubes pour chacune de ces premières et secondes parties est représentée sur la figure 3, la section des troisièmes parties étant similaire à celle des premières parties. La section de la seconde partie, visible en haut à gauche de la figure 3, peut être définie comme une combinaison d'un arc de cercle et d'un segment sécant audit arc de cercle.

La figure 4 montre le même élément de raccordement, modifié selon l'invention. Les pièces constitutives qui ne sont pas modifiées portent les mêmes références et ne sont pas décrites à nouveau.

Dans cette version améliorée les premières et troisièmes parties 101, 111 et 103,113 des conduits parallèles voient leur section réduite de façon à l'amener à la valeur que celle-ci a au niveau des secondes parties 102 et 112. Des ajouts de matière 21 et 23 sont constitués, lors de la coulée du matériau, à l'intérieur de ces parties des conduits, pour effectuer cette réduction de la section de passage du fluide. Comme indiqué sur la figure, ces ajouts peuvent donner aux premières et troisièmes parties des conduits parallèles la même forme en coupe qu'aux secondes parties, c'est à dire une forme d'arc de cercle limité par un segment sécant de façon à former là encore, un méplat à l'intérieur du tube. Ce méplat est, préférentiellement, aligné avec le méplat 15 des secondes parties, de façon à améliorer les caractéristiques hydrodynamiques de l'élément de raccordement. Autrement dit, la configuration de l'élément de raccordement conforme à l'invention permet d'optimiser la perte de charge tout en offrant le plus d'espace possible pour positionner le moyen de chauffage 14 sur le plateau.

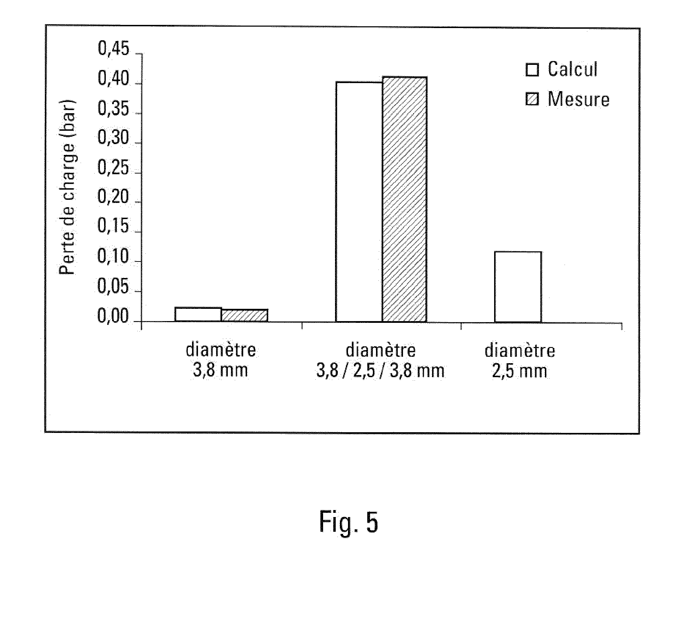

La figure 5 donne les résultats des évaluations hydrodynamiques effectuées sur divers éléments de raccordement, en fonction de la géométrie des canaux interne de ceux-ci. Les pertes de charge issues, soit du calcul soit de mesures, sont indiquées, en premier lieu, dans le cas de tubes à cavité interne de section circulaire dont le diamètre est constant sur toute leur longueur et égal à celui des premières et troisièmes parties, en second lieu, dans le cas de la configuration de la figure 3 et enfin, dans le cas de l'invention représentée sur la figure 4.

Le premier cas représente un cas idéal dans lequel l'encombrement de l'élément de raccordement ne pose pas de problème (par exemple par une absence de système de chauffage) et où les conduits parallèles 10 et 11 ont une section circulaire sur toute leur longueur, de grand diamètre, typiquement égal à 3,8 mm. On voit que les pertes de charge à travers l'élément de raccordement 7 sont extrêmement faibles, de l'ordre de 0,002 bars.

Le second cas correspond aux éléments de raccordement de la figure 3 dans lequel la section interne des conduits est réduite tout le long de leurs secondes parties 102,112. Le diamètre de la section interne passe ainsi de 3,8 mm dans les premières parties 101, 111 des tubes parallèles, à 2,5 mm en traversant leurs deuxièmes parties 102,112 au niveau du plateau 12, pour revenir à celui de la section initiale (3,8 mm) le long des troisièmes parties 103, 113. On voit que la perte de charges dans chacun des conduits est importante, puisqu'elle se monte à 0,40 bar contre une valeur négligeable précédemment.

Enfin le troisième cas correspond à l'invention, dans laquelle le diamètre de la section interne reste constant tout au long de sa traversée de l'élément de raccordement, en s'alignant sur le diamètre de la partie la plus contrainte, à savoir les secondes parties 102, 112. On voit que la perte de charge, si elle se situe à un niveau nettement supérieur à celle du premier cas (0,12 bars), reste néanmoins très nettement inférieure à celle du second cas, c'est-à-dire à la configuration de la figure 3.

En résumé la demanderesse, qui était confronté à des pertes de charges importantes dues au rétrécissement de la section interne des conduits parallèles au niveau du moyen de chauffage 14, a tenté de les réduire. Un homme du métier confronté à ce problème tenterait de conserver des sections les plus grandes possibles et ne se poserait pas la question de modifier le raccordement en allant dans le sens inverse. C'est pourtant ce qu'a fait la demanderesse qui, confrontée à une impossibilité d'élargir la section des secondes parties des conduits parallèles pour des raisons d'encombrement latéral, a testé une configuration où la section interne reste constante sur toute la traversée de l'élément 7, même si celle-ci reste comparativement faible. Elle a constaté, de façon surprenante, que les pertes de charges sont très nettement inférieures à celles de l'art antérieur. Elle a alors poursuivi sa démarche de recherche d'une réduction maximale des pertes de charge en optimisant la forme interne des tubes et, en particulier, en donnant aux premières et troisièmes parties la même forme en coupe que celle des secondes parties. Une telle configuration améliore encore l'écoulement en leur sein et donc optimise l'impact de l'élément de raccordement sur les pertes de charge.

## Revendications

1. Élément de raccordement (7) entre un tube (6) d'alimentation en liquide et un connecteur (4) d'un dispositif d'essuyage d'une vitre d'un véhicule, ledit élément de raccordement comprenant au moins un conduit (10, 11), apte à canaliser le liquide entre ledit tube d'alimentation et ledit connecteur, et un moyen de chauffage (14) du liquide circulant dans le ou lesdits conduits (10, 11), ledit moyen de chauffage étant apte à être alimenté électriquement et positionné sur une zone dudit élément de raccordement, dite zone de chauffage, s'inscrivant au moins en partie dans un encombrement du ou desdits conduits (10, 11), **caractérisé en ce que** la section interne du ou des conduits (10, 11) reste constante sur toute leur longueur au niveau de ladite zone de chauffage ainsi qu'en amont et/ou en aval de ladite zone de chauffage.

2. Élément de raccordement selon la revendication 1, les conduits de l'élément de raccordement ayant une section réduite par le placement d'un méplat qui empiète sur l'intérieur des conduits, pour le logement dudit moyen de chauffage.

3. Élément de raccordement selon la revendication 1 ou 2 comprenant deux dits conduits (10, 11), destinés à être raccordés audit tube d'alimentation, prévu double.

4. Élément de raccordement selon l'une quelconque des revendications précédentes dans lequel lesdits conduits (10, 11) sont reliés l'un à l'autre par un moyen de solidarisation (12) formant moyen d'espacement entre eux et définissant ladite zone de chauffage.

5. Élément de raccordement selon l'une quelconque des revendications précédentes dans lequel lesdits conduits (10, 11) sont constitués par une succession de segments (101, 111, 102, 112, 103, 113), les segments d'un conduit étant parallèles à ceux de l'autre conduit.

6. Élément de raccordement selon l'une quelconque des revendications précédentes dans lequel la section interne de tous les segments desdits conduits a la forme d'une combinaison d'un arc de cercle et d'un segment sécant audit arc de cercle.

7. Élément de raccordement selon l'une quelconque des revendications précédentes dans lequel le moyen de solidarisation est un plateau (12) s'étendant, selon un plan diamétral, entre deux desdits segments (102,112), dits segments centraux.

8. Élément de raccordement selon l'une quelconque des revendications précédentes dans lequel lesdits segments sécants sont orientés perpendiculairement au plateau du moyen de solidarisation (12).

9. Élément de raccordement selon l'une des revendications 7 ou 8 dans lequel lesdits segments centraux (102, 112) ont une section extérieure réduite par rapport à celle des autres segments desdits tubes (101, 111, 103, 113).

10. Élément de raccordement selon l'une des revendications précédentes, **caractérisé en ce que** les conduits présentent successivement une première partie, une deuxième partie et une troisième partie, de section interne constante d'une partie à l'autre, lesdites première et troisième parties ayant des sections extérieures sensiblement cylindriques tandis que la deuxième partie a une section extérieure présentant un méplat.

11. Élément de raccordement selon la revendication précédente, **caractérisé en ce que** la deuxième partie s'étend longitudinalement au moins sur la partie porteuse du moyen de chauffage.

12. Système d'approvisionnement et/ou de distribution (9) en liquide lave-glace d'une installation d'essuyage pour véhicule automobile comprenant au moins un tube (6) d'alimentation en liquide, un connecteur (4) d'un dispositif d'essuyage, et un élément de raccordement (7) selon l'une des revendications précédentes, reliant ledit tube audit connecteur.
